# EUROPÄISCHE PATENTSCHRIFT

(11) **EP 2 997 315 B1**
(45) Veröffentlichungstag und Bekanntmachung des Hinweises auf die Patenterteilung: **03.05.2017**
(21) Anmeldenummer: 14758478.3
(22) Anmeldetag: 15.05.2014
(51) Int. Cl.: F24J 2/52

(54) **SYSTEM ZUM BEFESTIGEN VON MONTAGESCHIENEN**
SYSTEM FOR FIXING MOUNTING RAILS
SYSTÈME POUR LA FIXATION DE RAILS DE MONTAGE

(30) Priorität: 15.05.2013 DE 202013004497 U
(43) Veröffentlichungstag der Anmeldung: 23.03.2016
(73) Patentinhaber: Schletter GmbH, 83527 Kirchdorf (DE)
(72) Erfinder: SCHMID, Bernhard, 83562 Rechtmehring (DE)
(74) Vertreter: Thum, Bernhard
(86) Internationale Anmeldenummer: PCT/DE2014/000250
(87) Internationale Veröffentlichungsnummer: WO 2014/183743

(56) Entgegenhaltungen:
- EP-A1- 2 527 762
- DE-U1-202009 018 641
- US-A1- 2006 261 063
- US-A1- 2010 192 505

## Beschreibung

Die vorliegende Erfindung betrifft ein System zur Befestigung von Montageschienen. Bekannterweise können zwei Bauteile durch Ineinanderschieben zweckmäßig zusammengesetzt werden, wobei ein Fortsatz des einen Bauteils in eine passende Aufnahme des anderen Bauteils eingeführt wird.

Gestaltet man den Fortsatz in einer quadratischen Art, kann das eine Bauteil wechselweise in zueinander senkrechten Orientierungen mit dem anderen Bauteil zusammengeschoben werden. Die Herstellung eines Bauteils mit einem solchen Fortsatz kann jedoch Nachteile haben.

Es ist eine Aufgabe der Erfindung, ein System bereitzustellen, das eine einfache Befestigung von Montageschienen ermöglicht. Die Aufgabe wird mit dem in Anspruch 1 angegebenen System gelöst. Das System ist zum Zusammensetzen zweier Bauteile in zueinander alternativen Orientierungen vorgesehen und umfasst ein erstes Bauteil mit einer Aufnahme und ein zweites Bauteil mit einem Fortsatz. Zum Zusammensetzen des zweiten Bauteils mit dem ersten Bauteil ist der Fortsatz passend in die Aufnahme einschiebbar dergestalt, dass das zweite Bauteil bezüglich des ersten Bauteils in allen drei rotatorischen Freiheitsgraden und in zwei von drei translatorischen Freiheitsgraden festgelegt und in einer ersten Orientierung positioniert ist. Lediglich zur Klarheit sei angemerkt, dass als Freiheitsgrad eine unabhängige Bewegungsmöglichkeit eines Körpers im Raum verstanden wird und ein Körper insgesamt sechs solcher Freiheitsgrade aufweist, nämlich drei rotatorische und drei translatorische, denn der Körper ist in drei voneinander unabhängigen Richtungen verschiebbar und in drei voneinander unabhängigen Ebenen drehbar.

Alternativ zu der ersten Orientierung kann das zweite Bauteil mit dem ersten Bauteil in einer bezüglich des ersten Bauteils zweiten Orientierung zusammengesetzt sein. Die erste Orientierung und die zweite Orientierung unterscheiden sich geometrisch gesehen durch eine Drehung des zweiten Bauteils um eine Achse um einen rechten Winkel in oder gegen den Uhrzeigersinn.

Charakteristisch ist, dass das System einen Adapter aufweist. Der Adapter ist auf das zweite Bauteil passend aufsetzbar dergestalt, dass der Adapter an dem zweiten Bauteil bezüglich der Achse transversal und rotatorisch festgelegt ist. Weiter ist vorgesehen, dass das zweite Bauteil in der zweiten Orientierung mittels des Adapters mit dem ersten Bauteil zusammensetzbar ist, wobei der Adapter in die Aufnahme passend einschiebbar ist dergestalt, dass der Adapter bezüglich des erstes Bauteils in allen drei rotatorischen Freiheitsgraden und denselben zwei translatorischen Freiheitsgraden festgelegt ist und außerdem das zweite Bauteil bezüglich der Achse axial zwischen dem ersten Bauteil und dem Adapter festgelegt ist.

Das zweite Bauteil kann demnach in der ersten Orientierung ohne den Adapter mit dem ersten Bauteil zusammengeschoben werden, wohingegen es zum Zusammenschieben in der zweiten Orientierung des Adapters bedarf. Dazu wird der Adapter auf das zweite Bauteil aufgesetzt und samt diesem in der zweiten Orientierung passend in die Aufnahme geschoben. Der Adapter kann demnach genauso wie das zweite Bauteil mit seinem Fortsatz in die Aufnahme geschoben werden. Der Adapter kann daher anstelle des Fortsatzes in einem direkten Eingriff mit der Aufnahme stehen, wobei im zusammengesetzten Zustand das zweite Bauteil in der zweiten Orientierung an dem Adapter sowie axial zwischen dem Adapter und dem ersten Bauteil festgelegt ist. Die Bewegungsrichtung beim Schieben verläuft in beiden Orientierungen entlang des dritten translatorischen Freiheitsgrades. Neben dieser einfachen, stabilen, präzisen und für Montagefehler unanfälligen Möglichkeit des Zusammensetzens zweier Bauteile besteht ein wesentlicher Vorteil des Systems darin, dass das erste Bauteil zumindest im Bereich seiner Aufnahme und das zweite Bauteil zumindest im Bereich seines Fortsatzes und auch der Adapter sehr einfach und materialeffizient herstellbar sind, denn diese können eine prismatische Grundform aufweisen und somit durch Abtrennen von einem Extrusionskörper massenhaft und in gleichbleibender Qualität erzeugt werden. Zur Erfüllung der Funktion des Zusammensetzens in zwei alternativen Orientierungen sind keine weiteren wesentlichen Bearbeitungsschritte erforderlich. So kann die Aufnahme als einfache T-Nut und der Fortsatz als im Querschnitt formschlüssig passend T-Leiste ausgeführt sein. Ebenso ist eine Schwalbenschwanzverbindung oder eine vergleichbare Schiebeverbindung oder Geradführung möglich, die maximal einen translatorischen Freiheitsgrad zwischen den zwei Bauteilen belässt. Der Adapter ist als einfaches Profilstück ausgeführt mit einem hutförmigen Querschnitt, das heißt mit einem U-förmigen Querschnitt mit an den Enden diametral nach außen abstehenden Fortsätzen. Es versteht sich, dass das erste und das zweite Bauteil nach dem Zusammensetzen ohne Materialschädigung wieder zerlegbar sind.

In einer Ausführungsform können die Aufnahme und der Fortsatz asymmetrisch gestaltet sein, sodass ein Einschieben des Fortsatzes in die Aufnahme in einer bezüglich des ersten Bauteils dritten Orientierung, die zu der ersten Orientierung um die Achse um 180° gedreht ist, blockiert ist. Dies kann etwaige Montagefehler hinsichtlich der Orientierung des zweiten Bauteils wirksam verhindern.

In einer Ausführungsform kann an dem zweiten Bauteil ein Anschlag vorgesehen sein, der in der ersten Orientierung in die Aufnahme mit einschiebbar ist und in der zweiten Orientierung am ersten Bauteil beim des Einschiebens anschlagen kann, sodass eine Bewegung entlang des verbleibenden dritten translatorischen Freiheitsgrades einseitig blockiert ist.

In einer Ausführungsform kann das zweite Bauteil eine Öffnung aufweisen, in die der Adapter zum Aufsetzen auf das zweite Bauteil einlegbar ist. Der Adapter kann mittels der Öffnung auf einfache Weise an dem Bauteil festgelegt sein. Alternativ oder ergänzend ist es möglich, im Adapter eine Öffnung vorzusehen, welche das zweite Bauteil beim Aufsetzen passend aufnimmt.

In einer Ausführungsform können die Aufnahme, der Fortsatz und der Adapter eine prismatische Grundform aufweisen. Die im Wesentlichen prismatische Form ermöglicht eine Herstellung durch Extrudieren. Es versteht sich, dass für das Zusammenschieben funktional nicht notwendige Abweichungen von einer strengen prismatischen Form möglich sind, etwa Befestigungslöcher, gefaste Kanten und dergleichen.

In einer Ausführungsform sind das erste Bauteil, das zweite Bauteil und der Adapter genau drei Extrusionsteile.

Nachfolgend wird die Erfindung anhand eines Ausführungsbeispiels unter Bezugnahme auf Zeichnungen näher erläutert. Es zeigen:
**Fig. 1** eine Schrägansicht eines erfindungsgemäßen Systems mit zwei Bauteilen in einer ersten Orientierung und mit einem hier nicht benötigten Adapter,
**Fig. 2** eine Schrägansicht des Systems gemäß **Fig. 1** ohne Adapter und im zusammengefügten Zustand,
**Fig. 3** eine Seitenansicht des Systems gemäß **Fig. 1** ohne Adapter und im zusammengefügten Zustand,
**Fig. 4** eine Schrägansicht des Systems gemäß **Fig. 1** mit den zwei Bauteilen in einer zweiten Orientierung und mit dem Adapter,
**Fig. 5** eine Schrägansicht des Systems gemäß **Fig. 4** im zusammengefügten Zustand,
**Fig. 6** eine Seitenansicht das System gemäß **Fig. 4** im zusammengefügten Zustand,
**Fig. 7** eine Draufsicht auf das erste Bauteil und das zweite Bauteil in der ersten Orientierung und der zweiten Orientierung (gestrichelt),
**Fig. 8** eine Seitenansicht des System gemäß **Fig. 1** in einer Beispielanordnung,
**Fig. 9** eine Seitensicht des Systems gemäß **Fig. 1**, ergänzt um einen Anschlag,
**Fig. 10** eine Draufsicht des Systems gemäß **Fig. 9**, zusammengefügt in einer zweiten Orientierung.

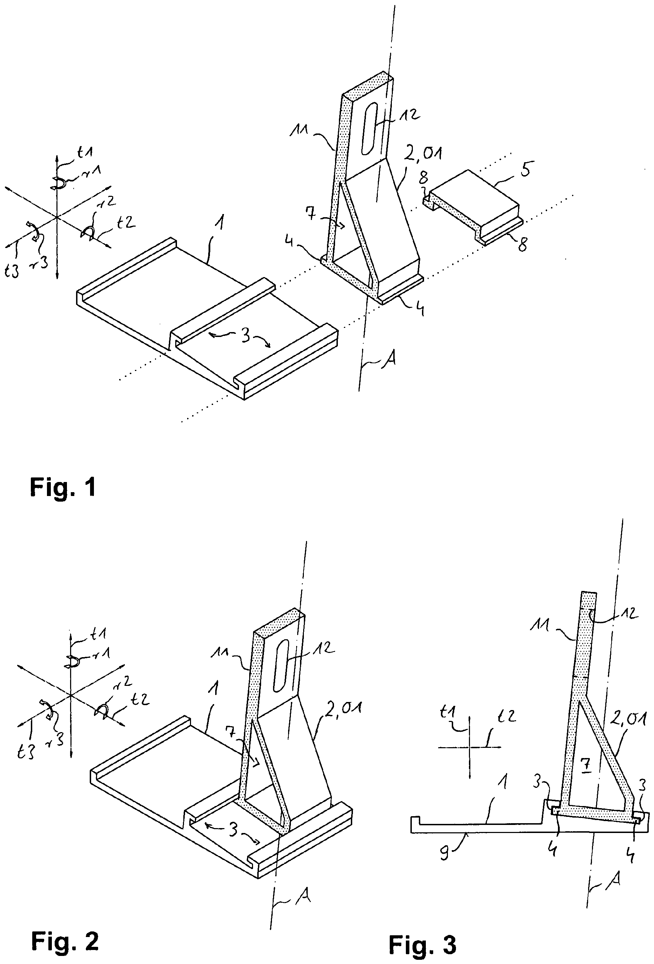

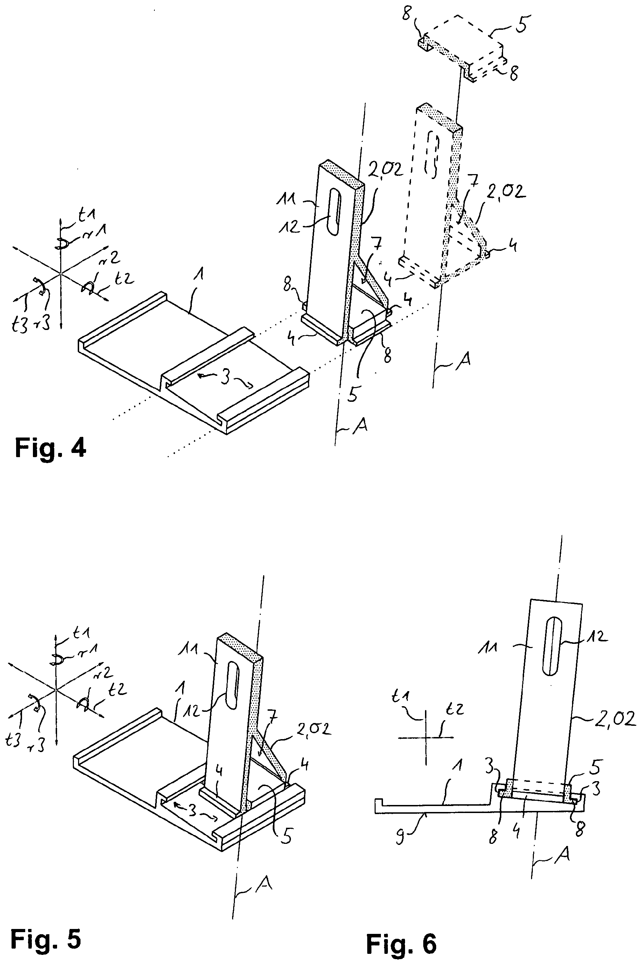

Die **Fig. 1** bis **Fig. 7** zeigen ein erfindungsgemäßes System mit einem ersten Bauteil 1 und einem zweiten Bauteil 2. Das zweite Bauteil **2** kann mit dem ersten Bauteil **1 wie** in **Fig. 1** bis **Fig. 3** dargestellt in einer ersten Orientierung **O1** und wie in **Fig. 4** bis **Fig. 6** dargestellt in einer zweiten Orientierung **O2** durch Ineinanderschieben zusammengesetzt werden. Das Zusammensetzen in der zweiten Orientierung **O2** erfolgt mittels eines Adapters **5.** In der ersten Orientierung **O1** wird der Adapter nicht benötigt.

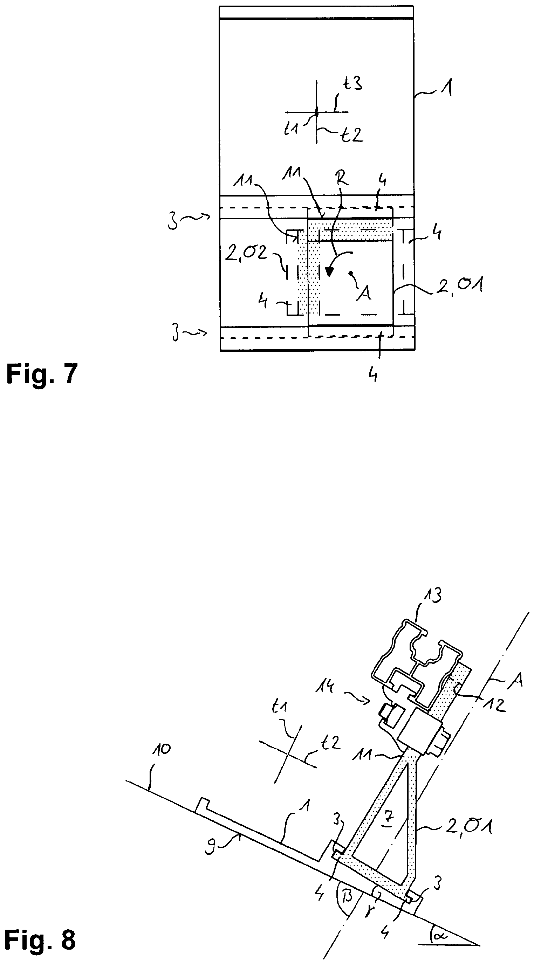

Wie insbesondere aus **Fig. 7** ersichtlich ist, unterscheiden sich die erste Orientierung **O1** und die zweite Orientierung **O2** (gestrichelt) durch eine Drehung **R** des zweiten Bauteils **2** um eine gedachte Achse **A** um 90 Grad gegen den Uhrzeigersinn. Die Draufsicht gemäß **Fig. 7** entspricht einer Projektion entlang der Achse **A.**

Das erste Bauteil **1** hat in diesem Ausführungsbeispiel eine plattenartige Gestalt und kann alternativ als Fußplatte bezeichnet werden. Das erste Bauteil **1** weist eine Aufnahme **3** auf. Die Aufnahme **3** ist als einfache Führungsnut mit einem breiten T-förmigen Querschnitt ausgeführt. Das zweite Bauteil **2** hat in diesem Ausführungsbeispiel eine geschlossene λ-förmige Gestalt und weist einen zweiseitigen Fortsatz **4** auf. Der Fortsatz **4** ist ein unterer Endbereich des zweiten Bauteils **2**, der zu der Aufnahme **3** oder zumindest zu seitlichen Führungsflächen der Aufnahme **3** formpassend gestaltet ist. Entsprechend weist der Fortsatz **4** eine breite, in der Zeichnung auf dem Kopf stehende T-Form auf. Der Adapter **5** ist als Profilstück mit einem hutförmigen Querschnitt zu erkennen, das heißt es weist einen U-förmigen Querschnitt mit an den Enden diametral nach außen abstehenden Fortsätzen **8** auf. Auch der Adapter **5** ist zu der Aufnahme **3** formpassend gestaltet. Es versteht sich, dass für das Einschieben ein passendes Spiel zwischen der Aufnahme **3** einerseits und dem Fortsatz **4** bzw. dem Adapter **5** anderseits besteht. Das erste Bauteil **1**, das zweite Bauteil **2** und der Adapter **5** sind drei einstückige Extrusionsteile und weisen prismatische Grundformen auf. Wie aus **Fig. 1** bis **Fig. 3** ersichtlich ist, wird zum Zusammensetzen des zweiten Bauteils **2** mit dem ersten Bauteil **1** in der ersten Orientierung **O1** der Fortsatz **4** formpassend in die Aufnahme eingeschoben. Der Fortsatz **4** hintergreift dabei beide Seiten der Aufnahme **3**, sodass das zweite Bauteil **2** bezüglich des ersten Bauteils **1** in allen drei rotatorischen Freiheitsgraden **r1**, **r2**, **r3** und in zwei von drei translatorischen Freiheitsgraden **t1**, **t2** festgelegt und in der ersten Orientierung **O1** positioniert ist. Entlang des einzig verbleibenden dritten translatorischen Freiheitsgrades **t3** kann das zweite Bauteil **2** weiter verschoben werden. Die Verbindung zwischen der Aufnahme **3** und dem Fortsatz **4** kann daher auch als geschlossene Linearführung bezeichnet werden. Entlang des dritten Freiheitsgrades **t3** ist das erste Bauteil **1** länger als das zweite Bauteil **2** und der Adapter **5** ausgeführt, das heißt genauer etwa doppelt so lang, so dass mehrere Schiebestellungen für das zweite Bauteil **2** und den Adapter **5** möglich sind.

In einer nicht näher dargestellten Weiterentwicklung ist es möglich, eine Bewegung des zweiten Bauteiles **2** relativ zu dem erste Bauteil **1** entlang des dritten translatorischen Freiheitsgrades **t3** durch Klemmmittel zu erschweren, das heißt durch Kraftschluss zu hemmen. Solche Klemmmittel können direkt am ersten Bauteil **1** oder am zweiten Bauteil **2** angeformt sein, etwa als Klemmleiste, die nach dem Zusammensetzen unter plastischer Verbiegung gegen das jeweils andere Bauteil gepresst wird.

Aus **Fig. 4** bis **Fig. 6** ist ersichtlich, wie das Zusammensetzen des zweiten Bauteils **2** mit dem ersten Bauteil **1** in der zweiten Orientierung **O2** erfolgt. In einem ersten Schritt wird der Adapter **5** passend auf das zweite Bauteil **2** aufgesetzt, wobei der Adapter **5** und das zweite Bauteil **2** gegenseitig Ineinandergreifen. Dazu weist das zweite Bauteil **2** eine Öffnung **7** auf, in die der Adapter **5** zum passenden Aufsetzen seitlich einlegbar ist. Wesentlich ist, dass der Adapter **5** an dem zweiten Bauteil **2** quer zu der Achse **A** festgelegt ist, und zwar im vorliegenden Beispiel in zwei voneinander unabhängigen Richtungen. Dies wird in der einen Richtung durch Anlage an einem Rand der Öffnung **7** und in der anderen Richtung durch ein Umgreifen durch den Adapter **5** mittels seines hutförmigen Querschnitts erreicht. Alternativ ist denkbar, dass der Adapter **5** nur in einer Richtung quer zu der Achse **A** festgelegt ist, vorzugsweise eine zu dem dritten Freiheitsgrad **t3** senkrechte Richtung, sodass im zusammengesetzten Zustand der Adapter **5** sowohl relativ zu dem ersten Bauteil **1** als auch relativ zu dem zweiten Bauteil **2** verschieblich ist. Nach dem Aufsetzen ist der Adapter **5** durch das gegenseitige Ineinandergreifen an dem zweiten Bauteil **2** bezüglich der Achse **A** außerdem drehstarr festgelegt.

Wie aus **Fig. 4** bis **Fig. 6** weiter ersichtlich ist, wird in einem zweiten Schritt der Adapter **5** zusammen mit dem zweiten Bauteil **2** in der zweiten Orientierung **O2** in die Aufnahme **3** geschoben. Der Adapter **5** ist dabei genauso in die Aufnahme **3** einschiebbar wie der Fortsatz **4** in der ersten Orientierung **O1.** Der Adapter **5** ist demnach im eingeschobenen Zustand bezüglich des ersten Bauteils **1** ebenfalls in den drei rotatorischen Freiheitsgraden **r1**, **r2**, **r3** und denselben zwei translatorischen Freiheitsgraden **t1**, **t2** festgelegt. Im eingeschobenen Zustand ist das zweite Bauteil **2** dann in der zweiten Orientierung **O2** mit dem ersten Bauteil **1** fertig zusammengesetzt. Die Extrusionsrichtungen bzw. die Prismenachsen der eingangs erwähnten prismatischen Grundformen des ersten Bauteils 1 und des Adapters **5** verlaufen im zusammengesetzen Zustand parallel zum dritten translatorischen Freiheitsgrad **t3.** Die Extrusionsrichtung bzw. die Prismenachse des zweiten Bauteils **2** verläuft in der ersten Orientierung **O1** ebenfalls parallel zu dem dritten translatorischen Freiheitsgrad **t3** und in der zweiten Orientierung **O2** senkrecht zu dem dritten translatorischen Freiheitsrad **t3.**

Die Außenkontur des Adapters **5** und die Außenkontur des Fortsatzes **3** sind zumindest abschnittsweise identisch, insbesondere dort wo eine Gleitpaarung mit der Aufnahme **4** besteht. Besonders in der Seitenansicht gemäß **Fig. 3** ist zu erkennen, dass die Aufnahme **3** und der Fortsatz **4** geringfügig asymmetrisch gestaltet sind. Dadurch ist ein Einschieben des Fortsatzes in die Aufnahme **3** in einer bezüglich des ersten Bauteils **1** dritten Orientierung blockiert, die zu der ersten Orientierung **O1** um die Achse **A** um 180 Grad gedreht ist. Die Aufnahme **3** und der Fortsatz **4** in der Zeichnung gemäß **Fig. 3** links etwas höher ausgeführt als rechts. Dadurch kann das zweite Bauteil **2** nicht in der um 180 Grad gewendeten Orientierung mit dem ersten Bauteil **1** zusammengefügt werden. Ebenso sind die Fortsätze **8** des Adapters **5** unterschiedlich hoch ausgeführt und daher ebenfalls nur in einer Orientierung, nicht aber in einer Wendestellung in die Aufnahme **3** einführbar.

Wie aus **Fig. 4** bis **Fig. 6** weiter ersichtlich ist, wird in der zweiten Orientierung das zweite Bauteil **2** bezüglich der Achse **A** axial zwischen dem ersten Bauteil **1** und dem Adapter **5** festgelegt. Mit anderen Worten wird das zweite Bauteil **2** mittels des Adapters **5** in Richtung der Achse **A** gegen das erste Bauteil **1** niedergehalten.

**Fig. 8** zeigt das System gemäß **Fig. 1** in einer bevorzugten Anordnung. Das zweite Bauteil **2** ist mit dem ersten Bauteil **1** in der ersten Orientierung **O1** zusammengesetzt. Es kann wie zuvor beschrieben alternativ auch in der zweiten Orientierung **02** mit dem ersten Bauteil **1** zusammengesetzt sein. Das erste Bauteil **1** sitzt mit seiner Unterseite **9** auf einem Dachdeckungselement **10** auf, das lediglich symbolisch dargestellt ist. Das Dachdeckungselement **10** kann ein metallener Dachziegel sein und ist in der vorliegenden Anordnung in einem Winkel **α** von etwa 25° geneigt angeordnet, beispielsweise auf einem Schrägdach. Das erste Bauteil **1** kann mit dem Dachdeckungselement **10** und einer Unterkonstruktion des Schrägdaches fest verbunden sein. Hierfür können mehrere Schrauben vorgesehen sein, die durch Bohrungen im ersten Bauteil **1** und durch Löcher im Dachdeckungselement **1** in die Unterkonstruktion führen.

Wie aus der Schrägansicht gemäß **Fig. 2** zu erkennen ist, weist das Bauteil **2** einen Verstellabschnitt **11** auf, der sich parallel zu der Achse **A** erstreckt und von dem ersten Bauteil **1** weg steht und außerdem ein Langloch **12** enthält, das ebenfalls parallel zu der Achse **A** ausgerichtet ist. Der Verstellabschnitt **11** und das Langloch **12** stehen in einem Bereich von 90° ± 10° etwa senkrecht zu der Unterseite und zu dem Dachdeckungselement **10**. Konkret ist diesem Ausführungsbeispiel ein Winkel **ß** von ca. 85° zwischen dem Verstellabschnitt **11** in seiner ersten Orientierung **O1** und der Unterseite **9** bzw. zwischen der Achse **A** und der Unterseite **9** vorgesehen. Dadurch, dass die Achse **A** nicht exakt senkrecht zu der Unterseite **9** steht, sondern mit einer kleinen Abweichung **γ** vom rechten Winkel zu dieser ausgerichtet ist, sind zumindest zwei gegenüberliegende Führungsflächen der Aufnahme **3** ebenfalls genau mit dieser kleinen Abweichung **γ** gegenüber der Unterseite **9** geneigt. Die Abweichung **γ** kann zwischen 2 und 10 Grad, vorzugsweise zwischen 5 und 7 Grad betragen. Die Abweichung ist erforderlich, um eine Neigungsabweichung des einzelnen Dachdeckungselements **10** von der durchgängigen Neigung des Schrägdaches auszugleichen, sodass der Verstellabschnitt **11** sowohl in der ersten Orientierung **01** als auch in der zweiten Orientierung **02** möglichst genau senkrecht zu der durchgängigen Neigung des Dachs steht. Die Neigungsabweichungen der Dachdeckungselemente sind bei einer Seitenansicht einer Dachdeckung oftmals als Sägezahnlinie erkennbar.

Weiter ist aus **Fig. 2** und **Fig. 8** zu erkennen, dass im zusammengesetzten Zustand die Achse **A** die Unterseite **9** oder zumindest ein konvexes Hüllpolygon davon durchdringt. Dies gilt auch, wenn das zweite Bauteil **2** wie in **Fig. 5** in der zweiten Orientierung **O2** mit dem ersten Bauteil **1** zusammengesetzt ist. Außerdem ist im zusammengesetzten Zustand und in einer Projektion, die wie in **Fig. 7** in der Achse **A** verläuft oder zu der Unterseite **9** senkrecht ist, das zweite Bauteil **2** vollständig oder zumindest mehrheitlich innerhalb der Unterseite bzw. des konvexen Hüllpolygons positioniert.

An dem zweiten Bauteil **2**, das heißt genauer an dem Verstellabschnitt **11** ist eine Montageschiene **13** unter Verwendung des Langlochs **12** höhenverstellbar befestigt. Höhenverstellbar bedeutet in diesem Zusammenhang entlang des Langlochs **12**, das in dem vorgenannten Winkelbereich etwa senkrecht zu der Unterseite **9** und dem Dachdeckungselement **10** ausgerichtet ist. Zur Befestigung der Montageschiene **13** an dem zweiten Bauteil **2** ist eine bekannte Klemmeinrichtung **14** vorgesehen. Die Klemmeinrichtung **14** hintergreift eine Nut der Montageschiene **13** und klemmt die Montageschiene **13** seitlich gegen den Verstellabschnitt **11**. Alternativ kann am dem Verstellabschnitt **11** auch ein 90°-Winkelstück höhenverstellbar angeordnet sein, auf dem seinerseits die Montageschiene aufliegt. Das erfindungsgemäße System eignet sich demnach besonders als Vorrichtung zur höhenverstellbaren Befestigung einer Montageschiene **13** auf einem Dachdeckungselement **10** eines Schrägdaches, wobei die Montageschiene **13** wahlweise bei ersten Orientierung **O1** des zweiten Bauteils **2** horizontal oder aber bei zweiter Orientierung **O2** des zweiten Bauteils **2** in der Neigung des Schrägdaches verlaufend angeordnet sein kann.

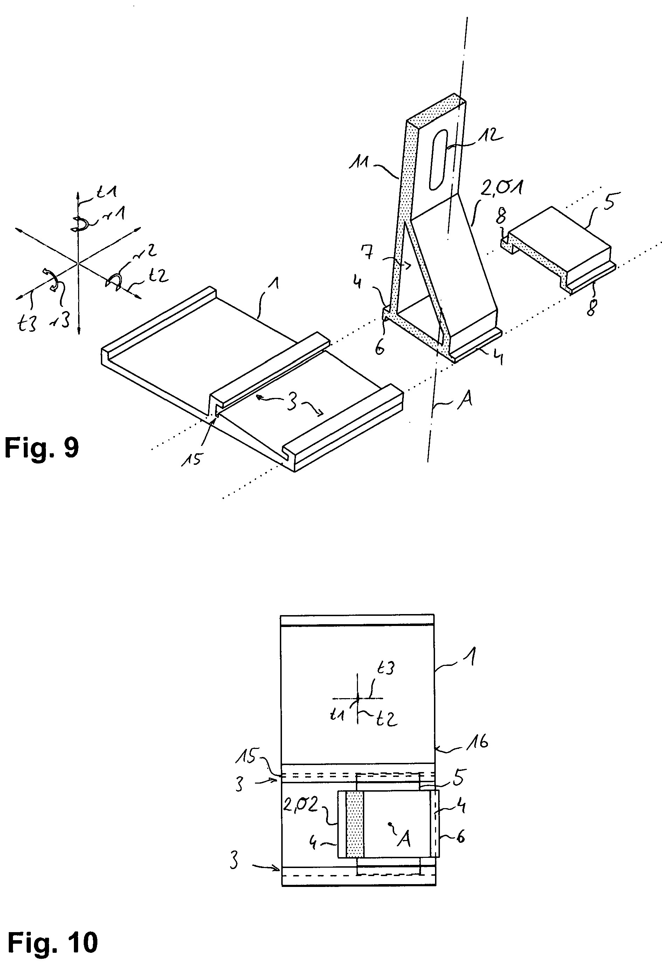

**Fig. 9** und **Fig. 10** zeigen ein System wie **Fig. 1**, das um einen Anschlag **6** am zweiten Bauteil **2** ergänzt ist. Der Anschlag **6** kann in der ersten Orientierung **O1** in eine entsprechende Vertiefung **15** der Aufnahme **3** eingeschoben und in der zweiten Orientierung **02** an einem Rand **16** des ersten Bauteil **1** anschlagen werden. Auf diese Weise wird in der zweiten Orientierung eine Bewegung des zweiten Bauteils **2** entlang des dritten translatorischen Freiheitsgrad **t3** einseitig blockiert.

## Patentansprüche

1. System zur Befestigung von Montageschienen,
- mit einem ersten Bauteil (1) das eine Aufnahme (3) aufweist, und mit einem zweiten Bauteil (2) das einen Fortsatz (4) aufweist, wobei zum Zusammensetzen des zweiten Bauteils (2) mit dem ersten Bauteil (1) der Fortsatz (4) passend in die Aufnahme (3) einschiebbar ist dergestalt, dass das zweite Bauteil (2) bezüglich des ersten Bauteils (1) in drei rotatorischen Freiheitsgraden (r1, r2, r3) und zwei translatorischen Freiheitsgraden (t1, t2) festgelegt und in einer ersten Orientierung (O1) positioniert ist,
- und das zweite Bauteil (2) mit dem ersten Bauteil (1) alternativ in einer bezüglich des ersten Bauteils (1) zweiten Orientierung (02) zusammengesetzt sein kann, wobei sich die erste Orientierung (01) und die zweite Orientierung (02) durch eine Drehung (R) des zweiten Bauteils (2) um eine Achse (A) um einen rechten Winkel unterscheiden,
- und mit einem Adapter (5), der einen U-förmigen Querschnitt mit an den Enden diametral nach außen abstehenden Fortsätzen (8) aufweist, wobei der Adapter (5) auf das zweite Bauteil (2) passend aufsetzbar ist dergestalt, dass der Adapter (5) an dem zweiten Bauteil (2) bezüglich der Achse (A) transversal und rotatorisch festgelegt ist, wobei der Adapter (5) und das zweite Bauteil (2) gegenseitig ineinandergreifen,
- und das zweite Bauteil (2) in der zweiten Orientierung (02) mittels des Adapters (5) mit dem ersten Bauteil (1) zusammensetzbar ist, wobei der Adapter (5) in die Aufnahme (3) passend einschiebbar ist dergestalt, dass der Adapter (5) bezüglich des ersten Bauteils (1) in den drei rotatorischen Freiheitsgraden (r1, r2, r3) und den zwei translatorischen Freiheitsgraden (t1, t2) festgelegt ist und das zweite Bauteil (2) bezüglich der Achse (A) axial zwischen dem ersten Bauteil (1) und dem Adapter (5) festgelegt sein kann.

2. System nach Anspruch 1, **dadurch gekennzeichnet, dass** die Aufnahme (3) und der Fortsatz (4) asymmetrisch gestaltet sind, sodass ein Einschieben des Fortsatzes (4) in die Aufnahme (3) in einer bezüglich des ersten Bauteils (1) dritten Orientierung, die zu der ersten Orientierung (01) um die Achse (A) um 180 Grad gedreht ist, blockiert ist.

3. System nach einem der vorhergehenden Ansprüche, **dadurch gekennzeichnet, dass** an dem zweiten Bauteil (2) ein Anschlag (6) vorgesehen ist, der in der ersten Orientierung (01) in die Aufnahme (3) einschiebbar ist und in der zweiten Orientierung (02) am ersten Bauteil anschlagen kann, sodass eine Bewegung entlang eines dritten translatorischen Freiheitsgrad (t3) einseitig blockiert ist.

4. System nach einem der vorhergehenden Ansprüche, **dadurch gekennzeichnet, dass** das zweite Bauteil (2) eine Öffnung (7) aufweist, in die der Adapter (5) zum passenden Aufsetzen auf das zweite Bauteil (*2*) einlegbar ist.

5. System nach einem der vorhergehenden Ansprüche, **dadurch gekennzeichnet, dass** die Aufnahme (3), der Fortsatz (4) und der Adapter (5) eine prismatische Grundform aufweisen.

6. System nach einem der vorhergehenden Ansprüche, **dadurch gekennzeichnet, dass** das erste Bauteil (1), das zweite Bauteil (2) und der Adapter (5) drei Extrusionsteile sind.

## Claims

1. A system for fixing mounting rails,
- with a first component (1) which comprises an accommodating means (3), and with a second component (2) which comprises an extension (4), wherein the extension (4) may be fittingly inserted into the accommodating means (3) for assembling the second component (2) with the first component (1) in such a manner that the second component (2) is defined in three rotatory degrees of freedom (r1, r2, r3) and two translatory degrees of freedom (t1, t2) relative to the first component (1) and is positioned in a first orientation (O1),
- and the second component (2) may alternatively be assembly with the first component (1) in a second orientation (O2), wherein the first orientation (O1) and the second orientation (O2) differ from each other by a rotation (R) of the second component (2) about an axis (A) through a right angle,
- and with an adapter (5) which comprises a U-shaped cross-section with extensions (8) which diametrically protrude outwardly at its ends, wherein the adapter (5) may be fittingly placed onto the second component (2) in such a manner that the adapter (5) is defined transversally and rotatorily relative to the axis (A), wherein the adapter (5) and the second component (2) are in mutual engagement,
- and the second component (2) in the second orientation (02) may be assembled with the first component (1) by means of the adapter (5), wherein the adapter (5) may be fittingly inserted into the accommodating means (3) in such a manner that the adapter (5) is defined in the three rotatory degrees of freedom (r1, r2, r3) and the two translatory degrees of freedom (t1, t2) relative to the first component (1) and the second component (2) may be defined axially between the first component (1) and the adapter (5) relative to the axis (A).

2. The system according to Claim 1, **characterised in that** the accommodating means (3) and the extension (4) are configured asymmetrically so that an insertion of the extension (4) into the accommodating means (3) in a third orientation which is rotated by 180 ° about the axis (A) relative to the first orientation (O1) is blocked.

3. The system according to one of the previous claims, **characterised in that** a stop (6) is provided at the second component (2), which may be inserted into the accommodating means (3) in the first orientation (O1) and may abut on the first component so that a movement along a third translatory degree of freedom (t3) is unidirectionally blocked.

4. The system according to one of the previous claims, **characterised in that** the second component (2) comprises an opening (7) into which the adapter (5) may be inserted for the fitting placement on the second component (2).

5. The system according to one of the previous claims, **characterised in that** the accommodating means (3), the extension (4) and the adapter (5) comprise a prismatic base.

6. The system according to one of the previous claims, **characterised in that** the first component (1), the second component (2) and the adapter (5) are three extrusion parts.

## Revendications

1. Système de fixation de rails de montage,
- comprenant un premier composant (1) qui présente un logement (3), et comprenant un deuxième composant (2) qui présente un prolongement (4), ledit prolongement (4) étant apte à être inséré de façon ajustée dans le logement (3) pour assembler le deuxième composant (2) avec le premier composant (1) de sorte que le deuxième composant (2) soit immobilisé dans trois degrés de liberté de rotation (r1, r2, r3) et deux degrés de liberté de translation (t1, t2) par rapport au premier composant (1) et positionné dans une première orientation (O1),
- et le deuxième composant (2) pouvant, en variante, être assemblé avec le premier composant (1) dans une deuxième orientation (O2) par rapport au premier composant (1), la première orientation (O1) et la deuxième orientation (O2) différant d'un angle droit par une rotation (R) du deuxième composant (2) autour d'un axe (A),
- et comprenant un adaptateur (5) ayant une section transversale en forme de U avec des prolongements (8) faisant saillie vers l'extérieur diamétralement aux extrémités, ledit adaptateur (5) pouvant être monté de façon ajustée sur le deuxième composant (2) de sorte que l'adaptateur (5) soit immobilisé transversalement et en rotation par rapport à l'axe (A) sur le deuxième composant (2), l'adaptateur (5) et le deuxième composant (2) venant en prise mutuelle,
- et le deuxième composant (2) pouvant être assemblé avec le premier composant (1) dans la deuxième orientation (02) au moyen de l'adaptateur (5), l'adaptateur (5) pouvant être inséré de façon ajustée dans le logement (3) de sorte que l'adaptateur (5) soit immobilisé dans les trois degrés de liberté de rotation (r1, r2, r3) et les deux degrés de liberté de translation (t1, t2) par rapport au premier composant (1) et que le deuxième composant (2) puisse être immobilisé axialement entre le premier composant (1) et l'adaptateur (5) par rapport à l'axe (A).

2. Système selon la revendication 1, **caractérisé en ce que** le logement (3) et le prolongement (4) sont configurés asymétriquement, de sorte qu'une insertion du prolongement (4) dans le logement (3) soit bloquée dans une troisième orientation par rapport au premier composant (1), qui est tournée de 180 degrés autour de l'axe (A) par rapport à la première orientation (O1).

3. Système selon l'une des revendications précédentes, **caractérisé en ce qu'**une butée (6) est prévue sur le deuxième composant (2), ladite butée pouvant être insérée dans le logement (3) dans la première orientation (O1) et venir en butée avec le premier composant dans la deuxième orientation (O2), de sorte qu'un déplacement le long d'un troisième degré de liberté de translation (t3) soit bloqué d'un côté.

4. Système selon l'une des revendications précédentes, **caractérisé en ce que** le deuxième composant (2) présente une ouverture (7) dans laquelle l'adaptateur (5) peut être introduit pour le montage ajusté sur le deuxième composant (2).

5. Système selon l'une des revendications précédentes, **caractérisé en ce que** le logement (3), le prolongement (4) et l'adaptateur (5) présentent une forme de base prismatique.

6. Système selon l'une des revendications précédentes, **caractérisé en ce que** le premier composant (1), le deuxième composant (2) et l'adaptateur (5) sont trois pièces d'extrusion.
